# EUROPÄISCHE PATENTANMELDUNG

(11) **EP 3 454 234 A1**
(43) Veröffentlichungstag der Anmeldung: **13.03.2019**
(21) Anmeldenummer: 17189524.6
(22) Anmeldetag: 06.09.2017
(51) Int. Cl.: G06F 17/50

(54) **VERFAHREN ZUM BEREITSTELLEN EINER ECHTZEITFÄHIGEN SIMULATION FÜR DIE STEUERGERÄTENTWICKLUNG UND SIMULATIONSVORRICHTUNG FÜR DIE STEUERGERÄTENTWICKLUNG**

(71) Anmelder: dSPACE digital signal processing and control engineering GmbH, 33102 Paderborn (DE)
(72) Erfinder: Amringer, Nicolas, 59556 Lippstadt (DE); Holler, Dominik, 33189 Schlangen (DE); Beringer, Steffen, 33104 Paderborn (DE)

(57) **Zusammenfassung**

Verfahren zum Bereitstellen einer echtzeitfähigen Simulation (6) für die Steuergerätentwicklung, wobei die echtzeitfähige Simulation (6) ein Steuergerät oder eine Umgebung eines Steuergeräts oder eine Kombination eines Steuergeräts und einer Umgebung des Steuergeräts simuliert, wobei die echtzeitfähige Simulation (6) eine Co-Simulation einer echtzeitfähigen Teilsimulation (10) und einer mit der echtzeitfähigen Teilsimulation interagierenden, nicht-echtzeitfähigen Teilsimulation (12) aufweist, wobei die echtzeitfähige Teilsimulation (10) und die nicht-echtzeitfähige Teilsimulation (12) zur Kommunikation von Simulationsdaten (Se0, Sn0, Se1, Sn1, Se2, Sn2, Se3, Sn3, Se4, Sn4, Se5, Sn5) ausgebildet sind, wobei die echtzeitfähige Teilsimulation (10) eine der Echtzeit entsprechende erste Simulationszeit (te) aufweist und die nicht-echtzeitfähige Teilsimulation (12) eine mit der ersten Simulationszeit gekoppelte, zu Beginn der echtzeitfähigen Simulation mit der ersten Simulationszeit übereinstimmende, virtuelle zweite Simulationszeit (tv) aufweist, wobei das Verfahren die folgenden Schritte aufweist: (a) auf Seiten der echtzeitfähigen Teilsimulation (10), Überprüfen, ob die nicht-echtzeitfähige Teilsimulation (12) berechnete Simulationsdaten für einen bevorstehenden Makro-Simulationsschritt bereitgestellt hat; (b) wenn die nicht-echtzeitfähige Teilsimulation (12) berechnete Simulationsdaten (Sn2) für den bevorstehenden Makro-Simulationsschritt fertiggestellt hat und der echtzeitfähigen Teilsimulation (10) bereitgestellt hat, Verwenden der berechneten Simulationsdaten (Sn2) für den bevorstehenden Makro-Simulationsschritt in der echtzeitfähigen Teilsimulation (10); (c) wenn die nicht-echtzeitfähige Teilsimulation (12) keine berechneten Simulationsdaten für den bevorstehenden Makro-Simulationsschritt fertiggestellt hat und der echtzeitfähigen Teilsimulation (10) bereitgestellt hat, Erstellen von geschätzten Simulationsdaten (Sg3) für den bevorstehenden Makro-Simulationsschritt; (d) Einstellen der zweiten Simulationszeit auf die erste Simulationszeit nach Fertigstellung der Berechnung von nicht rechtzeitig bereitgestellten Simulationsdaten (Sn3).

## Beschreibung

Die vorliegende Erfindung betrifft die Entwicklung von Steuergeräten, wie sie z.B. in der Automobilindustrie oder in der Luftfahrtindustrie zur Steuerung von technischen Systemen, wie z.B. Motoren oder Bremsen, verwendet werden. Insbesondere betrifft die vorliegende Erfindung Simulationsvorrichtungen, die im Entwicklungsprozess des Steuergeräts verwendet werden.

Die Entwicklung von Steuergeräten ist zu einem hochkomplexen Prozess geworden. So sollen neue Steuergeräte bzw. neue Steuerfunktionen so früh wie möglich im Entwicklungsprozess getestet werden, um die generelle Funktionalität zu überprüfen und die weitere Entwicklungsrichtung vorzugeben. Gegen Ende des Entwicklungsprozesses ist es wichtig, das schon weit entwickelte Steuergerät möglichst umfassend zu testen, um aufgrund der Testergebnisse notwendige Modifikationen vorzunehmen, bevor das Steuergerät in Benutzung bzw. in Serienfertigung geht, so dass es im späteren Betrieb unter allen Umständen wie gewünscht arbeitet.

Zu einem recht späten Stadium des Entwicklungsprozesses kommen sog. Hardware-in-the-Loop-Simulatoren (HIL-Simulatoren) zum Einsatz. Solche HIL-Simulatoren enthalten ein Modell des zu steuernden technischen Systems, wobei das Modell in Software vorliegt. Zusätzlich kann der HIL-Simulator weitere Modelle von technischen Systemen, die sich in der Umgebung des Steuergeräts und des zu steuernden technischen Systems befinden und mit dem Steuergerät und/oder dem zu steuernden technischen System zusammenwirken, enthalten. Der HIL-Simulator enthält weiterhin eine Eingabe/Ausgabe-Schnittstelle, an die das schon weit entwickelte, bereits in Hardware gegenständlich vorhandene Steuergerät, auch als gerätemäßige Implementierung des Steuergeräts bezeichnet, angeschlossen werden kann. In verschiedenen Simulationsdurchläufen kann nun die Funktionalität des Steuergeräts getestet werden, wobei die Reaktionen des Modells des zu steuernden technischen Systems auf die Signale des Steuergeräts sowie die Reaktionen des Steuergeräts auf von dem Modell des zu steuernden technischen Systems vorgegebene Ereignisse beobachtet werden können. Gegebenenfalls kann auch das Verhalten weiterer technischer Systeme aus der Umgebung von Steuergerät und zu steuerndem technischen System beobachtet werden. Dabei können sowohl der normale Betrieb als auch Fehler in dem zu steuernden technischen System als auch Fehler in dem Steuergerät als auch Fehler in der Kommunikation zwischen Steuergerät und zu steuerndem System, wie z.B. Kabelbrücke, als auch Fehler in der Stromversorgung, wie z.B. Kurzschlüsse, simuliert werden. Der HIL-Simulator ist ein Beispiel einer für die Steuergerätentwicklung eingerichteten Simulationsvorrichtung. Insbesondere ist der HIL-Simulator ein Beispiel einer für die Steuergerätentwicklung eingerichteten echtzeitfähigen Simulationsvorrichtung.

Der Aufwand zur Vorbereitung einer HIL-Simulation ist im Allgemeinen sehr hoch, insbesondere wenn eine Mehrzahl von Teilmodellen bzw. Teilsimulationen in dem HIL-Simulator zusammenwirkt. In Vorbereitung der Simulation wird die Kommunikation zwischen den Teilmodellen / Teilsimulationen konfiguriert. Die Teilmodelle / Teilsimulationen arbeiten sowohl einzeln als auch bezüglich ihrer Kommunikation echtzeitfähig. An die Teilmodelle / Teilsimulationen werden hohe Anforderungen gestellt, um ein insgesamt echtzeitfähiges Konstrukt für echtzeitfähige Simulationen bereitzustellen.

Demzufolge wäre es wünschenswert, bei der Erstellung von echtzeitfähigen Simulationen eine größere Flexibilität zu ermöglichen. Außerdem wäre es wünschenswert, eine Simulationsvorrichtung bereitzustellen, mit der eine größere Bandbreite von echtzeitfähigen Simulationen ermöglicht wird.

Beispielhafte Ausführungsformen der Erfindung umfassen ein Verfahren zum Bereitstellen einer echtzeitfähigen Simulation für die Steuergerätentwicklung, wobei die echtzeitfähige Simulation ein Steuergerät oder eine Umgebung eines Steuergeräts oder eine Kombination eines Steuergeräts und einer Umgebung des Steuergeräts simuliert, wobei die echtzeitfähige Simulation eine Co-Simulation einer echtzeitfähigen Teilsimulation und einer mit der echtzeitfähigen Teilsimulation interagierenden, nicht-echtzeitfähigen Teilsimulation aufweist, wobei die echtzeitfähige Teilsimulation und die nicht-echtzeitfähige Teilsimulation zur Kommunikation von Simulationsdaten ausgebildet sind, und wobei die echtzeitfähige Teilsimulation eine der Echtzeit entsprechende erste Simulationszeit aufweist und die nicht-echtzeitfähige Teilsimulation eine mit der ersten Simulationszeit gekoppelte, zu Beginn der echtzeitfähigen Simulation mit der ersten Simulationszeit übereinstimmende, virtuelle zweite Simulationszeit aufweist. Das Verfahren weist die folgenden Schritte auf: (a) auf Seiten der echtzeitfähigen Teilsimulation, überprüfen, ob die nicht-echtzeitfähige Teilsimulation berechnete Simulationsdaten für einen bevorstehenden Makro-Simulationsschritt bereitgestellt hat; (b) wenn die nicht-echtzeitfähige Teilsimulation berechnete Simulationsdaten für den bevorstehenden Makro-Simulationsschritt fertiggestellt hat und der echtzeitfähigen Teilsimulation bereitgestellt hat, Verwenden der berechneten Simulationsdaten für den bevorstehenden Makro-Simulationsschritt in der echtzeitfähigen Teilsimulation; (c) wenn die nicht-echtzeitfähige Teilsimulation keine berechneten Simulationsdaten für den bevorstehenden Makro-Simulationsschritt fertiggestellt hat und der echtzeitfähigen Teilsimulation bereitgestellt hat, Erstellen von geschätzten Simulationsdaten für den bevorstehenden Makro-Simulationsschritt; (d) Einstellen der zweiten Simulationszeit auf die erste Simulationszeit nach Fertigstellung der Berechnung von nicht rechtzeitig bereitgestellten Simulationsdaten.

Beispielhafte Ausführungsformen der Erfindung ermöglichen die Integration einer nicht-echtzeitfähigen Teilsimulation und einer echtzeitfähigen Teilsimulation zu einer insgesamt echtzeitfähigen Gesamtsimulation. Auf diese Weise ergeben sich neue Möglichkeiten bei der Erstellung von echtzeitfähigen Simulationen, weil es nicht mehr zwingende Voraussetzung ist, das jede Teilsimulation an sich echtzeitfähig ist. Dadurch kann für Simulationsbausteine, die in nicht-echtzeitfähiger Form vorliegen, darauf verzichtet werden, den Aufwand für die Erstellung einer echtzeitfähigen Form zu betreiben und die höheren Ressourcen für die Ausführung der echtzeitfähigen Form während der Simulation bereitstellen zu müssen. Dadurch können insgesamt echtzeitfähige Simulationen mit geringerem Aufwand und größerer Flexibilität bereitgestellt werden. Beispielhafte Ausführungsformen der Erfindung können es weiterhin ermöglichen, dass nicht-echtzeitfähige Teilsimulationen mit Lösungsalgorithmen, sogenannten Solvern, berechnet werden können, die für den Einsatz in nicht-echtzeitfähigen Simulationen vorgesehen sind. Dadurch kann sich auch bezüglich des Einsatzes von Lösungsalgorithmen eine größere Flexibilität ergeben. Weiterhin kann eine größere Flexibilität dadurch erreicht werden, dass aus früheren Entwicklungsphasen vorhandene, nicht-echtzeitfähige Modelle in Form der genannten nicht-echtzeitfähigen Teilsimulation in eine insgesamt echtzeitfähige Simulation integriert werden können. Eine solche Integration kann zu besonders geringem Aufwand bei der Zusammenstellung der Simulationsbausteine führen.

Beispielhafte Ausführungsformen der Erfindung ermöglichen insbesondere ein zuverlässiges Weiterarbeiten der Simulation, auch wenn die nicht-echtzeitfähige Teilsimulation in Verzug ist, wobei gleichzeitig ein hohes Maß an Simulationsgenauigkeit durch die Kopplung der Simulationszeiten der echtzeitfähigen Teilsimulation und der nicht-echtzeitfähigen Teilsimulation sowie das Einstellen der Simulationszeit der nicht-echtzeitfähigen Teilsimulation bei Verzögerungen ermöglicht wird. Das Erstellen von geschätzten Simulationsdaten ermöglicht der echtzeitfähigen Teilsimulation, den bevorstehenden Makro-Simulationsschritt vom Ablauf her genau so durchzuführen, als wären berechnete Simulationsdaten bereitgestellt. Während sich durch die Schätzung der Simulationsdaten ein negativer Einfluss auf die Genauigkeit der Simulation in der echtzeitfähigen Teilsimulation ergeben kann, bleibt der Simulationsablauf an sich ungestört, und die echtzeitfähige Teilsimulation muss ihren Ablauf nicht anpassen. Das Einstellen der zweiten Simulationszeit auf die erste Simulationszeit nach Fertigstellung der Berechnung von nicht rechtzeitig bereitgestellten Simulationsdaten ermöglicht eine klare Dokumentation von Seiten der nicht-echtzeitfähigen Teilsimulation, ob und wieweit die nicht-echtzeitfähige Teilsimulation im Verzug ist. Durch das Einstellen der zweiten Simulationszeit auf die erste Simulationszeit wird ein klares Signal bzw. ein eindeutiger Hinweis bereitgestellt, an Hand dessen die echtzeitfähige Teilsimulation eine Re-Synchronisierung der nicht-echtzeitfähigen Teilsimulation ableiten kann. Somit ergibt sich über das Einstellen der zweiten Simulationszeit ein klares Signal für die Gesamtsimulation, dass von den geschätzten, per Definition imperfekten Simulationsdaten auf die berechneten Simulationsdaten zurückgekehrt werden kann, so dass eine möglichst hohe Genauigkeit erzielt werden kann.

Das Schätzen von Simulationsdaten sowie die Kopplung der Simulationszeiten und das Einstellen der zweiten Simulationszeit auf die erste Simulationszeit als klares Signal ermöglichen einen ununterbrochenen Ablauf der Gesamtsimulation bei hoher Genauigkeit durch die möglichst umfassende Nutzung von den von der nicht-echtzeitfähigen Teilsimulation bereitgestellten berechneten Simulationsdaten.

Die echtzeitfähige Simulation simuliert ein Steuergerät oder eine Umgebung eines Steuergeräts oder eine Kombination eines Steuergeräts und einer Umgebung eines Steuergeräts. In dem oben beschriebenen Beispiel eines HIL-Simulators kann die echtzeitfähige Simulation die Umgebung eines Steuergeräts simulieren und auf dem HIL-Simulator ausgeführt werden. Insbesondere kann die echtzeitfähige Simulation dabei das zu steuernde technische System sein, ggf. in Kombination mit interagierenden Komponenten. Wenn z.B. ein Motorsteuergerät an den HIL-Simulator angeschlossen ist, kann die echtzeitfähige Simulation den Motor simulieren, ggf. auch z.B. eine Kombination aus Motor und Getriebe simulieren, um für das schon weit entwickelte, gegenständlich vorhandene Motorsteuergerät eine möglichst realistische Testumgebung zu bieten. Wenn die echtzeitfähige Simulation ein Steuergerät simuliert, ist es beispielsweise möglich, dass dieses simulierte Steuergerät an ein schon vorhandenes Steuergerät zur Modifikation der Steuerung oder direkt an ein zu steuerndes technisches System angeschlossen wird. So kann eine neu entwickelte Steuerung in einem sehr frühen Entwicklungsstadium als Simulation in der realen Welt getestet werden. Ein beispielhaftes Verfahren dafür ist das sogenannte Rapid Control Prototyping (RCP). Die echtzeitfähige Simulation kann auch die Kombination eines Steuergeräts und einer Umgebung des Steuergeräts simulieren. So kann innerhalb der echtzeitfähigen Simulation beispielsweise das vollständige Interagieren eines simulierten Steuergeräts und eines simulierten zu steuernden technischen Systems zu einem extrem frühen Entwicklungsstadium getestet werden. Das Verfahren gemäß beispielhaften Ausführungsformen der Erfindung kann somit an vielen Stellen der Steuergerätentwicklung eingesetzt werden.

Die echtzeitfähige Simulation weist eine Co-Simulation einer echtzeitfähigen Teilsimulation und einer mit der echtzeitfähigen Teilsimulation interagierenden, nicht echtzeitfähigen Teilsimulation auf. Definitionsgemäß ist die echtzeitfähige Teilsimulation in der Lage, zu vorbestimmten Zeitpunkten alle Eingangssignale ausgewertet zu haben und entsprechende Ausgangssignale bereitgestellt zu haben. Die vorbestimmten Zeitpunkte sind Zeitpunkte der Echtzeit, also einer Zeit, die mit der in der Realität ablaufenden Zeit korrespondiert. Eine Vielzahl von Mechanismen und eine ausreichend hohe Rechenkapazität sorgen für dieses deterministische Verhalten der echtzeitfähigen Teilsimulation. Die vorbestimmten Zeitpunkte, an denen sich die echtzeitfähige Teilsimulation deterministisch verhält und mit anderen Teilsimulationen bzw. mit anderen an die Simulation angeschlossenen Geräten, z.B. mit einem an einen HIL-Simulator angeschlossenen Steuergerät, Daten austauscht, werden Makro-Simulationsschritte genannt. Demgegenüber laufen innerhalb der echtzeitfähigen Teilsimulation innerhalb eines Makroschritts generell eine Vielzahl von Mikro-Simulationsschritten ab, in denen die echtzeitfähige Teilsimulation die Ergebnisse berechnet. Gegenüber der echtzeitfähigen Teilsimulation ist bei der nicht-echtzeitfähigen Teilsimulation kein solcher Determinismus garantiert. Es ist aufgrund des inneren Aufbaus der nicht-echtzeitfähigen Teilsimulation und/oder der Rechenkapazität der nicht-echtzeitfähigen Teilsimulation nicht garantiert, dass die nicht-echtzeitfähige Teilsimulation für jeden Makro-Simulationsschritt berechnete Simulationsdaten bereitstellt, wie dies für eine ideale Simulation gewünscht wäre.

Wie oben schon angedeutet, weist die echtzeitfähige Teilsimulation eine der Echtzeit entsprechende erste Simulationszeit auf. Die erste Simulationszeit korrespondiert somit mit der in der Realität ablaufenden Zeit, zumindest an den vordefinierten Zeitpunkten der Datenübertragung bzw. Kommunikation mit anderen Entitäten, also in der Regel zwischen den Makro-Simulationsschritten. Die nicht-echtzeitfähige Teilsimulation weist eine mit der ersten Simulationszeit gekoppelte, virtuelle zweite Simulationszeit auf. Die zweite Simulationszeit ist insofern virtuell, dass sie von der Echtzeit auch zu den vorbestimmten Zeitpunkten der Datenübertragung / Kommunikation abweichen kann. Die zweite Simulationszeit ist mit der ersten Simulationszeit dadurch gekoppelt, dass sie in Relation zu der ersten Simulationszeit definiert ist, d.h. dass sie mit der Echtzeit der echtzeitfähigen Teilsimulation in Beziehung steht. Zu Beginn der echtzeitfähigen Simulation stimmen die erste Simulationszeit und die zweite Simulationszeit überein. Das heißt, dass die zweite Simulationszeit bei der gleichen Echtzeit startet wie die erste Simulationszeit. Die nicht-echtzeitfähige Teilsimulation operiert mit dem Ziel, die zweite Simulationszeit stets möglichst in Übereinstimmung mit der ersten Simulationszeit zu halten.

Unter Echtzeit versteht man im Allgemeinen eine simultan zur Realität ablaufende Zeit. Inkremente der Echtzeit entsprechen gleichen Inkrementen der in der Realität ablaufenden Zeit. Für die erste Simulationszeit bedeutet dies, dass Inkremente der ersten Simulationszeit gleichen Inkrementen der in der Realität ablaufenden Zeit entsprechen. Eine echtzeitfähige Simulation bzw. Teilsimulation ist in der Lage, zumindest zu vorbestimmten Zeitpunkten deterministisch Ergebnisse zu liefern.

Die echtzeitfähige Teilsimulation und die nicht-echtzeitfähige Teilsimulation sind zur Kommunikation von Simulationsdaten ausgebildet. In anderen Worten, die nicht-echtzeitfähige Teilsimulation und die echtzeitfähige Teilsimulation tauschen während der Durchführung der Simulation Simulationsdaten aus. Dabei hängt das Verhalten der nicht-echtzeitfähigen Teilsimulation von den von der echtzeitfähigen Teilsimulation bereitgestellten Simulationsdaten ab, anders herum hängt das Verhalten der echtzeitfähigen Teilsimulation von den von der nicht-echtzeitfähigen Teilsimulation bereitgestellten Simulationsdaten ab. Zwischen der echtzeitfähigen Teilsimulation und der nicht-echtzeitfähigen Teilsimulation besteht eine bidirektionale Kommunikationsverbindung. Die Kommunikation findet zu vorbestimmten Zeitpunkten statt, d.h. die echtzeitfähige Teilsimulation und die nicht-echtzeitfähige Teilsimulation arbeiten darauf hin, Simulationsdaten spätestens bis zu den vorbestimmten Kommunikationszeitpunkten fertig zu stellen und der jeweils anderen Teilsimulation bereitzustellen.

Wie oben bereits beschrieben, ist die nicht-echtzeitfähige Teilsimulation nicht unter allen Umständen in der Lage, die Simulationsdaten bis zu den vorbestimmten Kommunikationszeitpunkten bereitzustellen. Wenn die nicht-echtzeitfähige Teilsimulation keine berechneten Simulationsdaten für den bevorstehenden Makro-Simulationsschritt fertiggestellt hat und der echtzeitfähigen Teilsimulation bereitgestellt hat, werden geschätzte Simulationsdaten für den bevorstehenden Makro-Simulationsschritt erstellt und von der echtzeitfähigen Teilsimulation für den bevorstehenden Makro-Simulationsschritt verwendet. Der Ausdruck, dass keine berechneten Simulationsdaten fertiggestellt und bereitgestellt sind, bedeutet, dass die zu dem gegebenen Zeitpunkt gewünschten berechneten Simulationsdaten nicht rechtzeitig fertiggestellt worden sind. Um die Echtzeit-Verarbeitung der echtzeitfähigen Teilsimulation nicht zu gefährden, werden als Ersatz geschätzte Simulationsdaten verwendet.

Das Einstellen der zweiten Simulationszeit auf die erste Simulationszeit nach Fertigstellung der Berechnung von nicht rechtzeitig bereitgestellten Simulationsdaten bedeutet, dass die virtuelle zweite Simulationszeit gemäß den erwünschten, aber nicht rechtzeitig berechneten Simulationsdaten in Relation zu der ersten Simulationszeit gebracht wird. In anderen Worten, die virtuelle zweite Simulationszeit wird auf Basis der ersten Simulationszeit, insbesondere auf Basis der für die neuen, aber nicht rechtzeitig berechneten Simulationsdaten verwendeten Simulationsdaten der echtzeitfähigen Teilsimulation, gesetzt. Bei Fertigstellung der Berechnung von nicht rechtzeitig bereitgestellten Simulationsdaten wird die zweite Simulationszeit zwar auf Basis der ersten Simulationszeit eingestellt, aber im Regelfall noch nicht mit der ersten Simulationszeit in Übereinstimmung gebracht. Allerdings eröffnet das Einstellen der zweiten Simulationszeit auf die erste Simulationszeit nach Fertigstellung der Berechnung von nicht rechtzeitig bereitgestellten Simulationsdaten die Möglichkeit, bei der Berechnung von Simulationsdaten aufzuholen und die zweite Simulationszeit für den nächsten Makro-Simulationsschritt bzw. für einen der nächsten Makro-Simulationsschritte mit der ersten Simulationszeit in Übereinstimmung zu bringen. Außerdem stellt das Einstellen der zweiten Simulationszeit ein Signal bzw. ein Mittel zum Messen dar, inwieweit die nicht-echtzeitfähige Teilsimulation der Echtzeit hinterherhinkt.

Auch wenn die berechneten Simulationsdaten für den bevorstehenden Makro-Simulationsschritt rechtzeitig fertiggestellt und der echtzeitfähigen Teilsimulation bereitgestellt worden sind, wird die zweite Simulationszeit auf die erste Simulationszeit eingestellt. In diesem Fall zeigt das Einstellen der zweiten Simulationszeit auf die erste Simulationszeit an, dass die virtuelle zweite Simulationszeit in Übereinstimmung mit der ersten Simulationszeit ist und dass die berechneten Simulationsdaten gemäß Echtzeit-Anforderungen bereitgestellt worden sind.

Gemäß einer weiteren Ausführungsform erfolgt das Erstellen von geschätzten Simulationsdaten auf Basis von früheren, von der nicht-echtzeitfähigen Teilsimulation bereitgestellten berechneten Simulationsdaten. In anderen Worten, geschätzte Simulationsdaten können auf Basis von Simulationsdaten erzeugt werden, die von der nicht-echtzeitfähigen Teilsimulation für vorhergehende Makro-Simulationsschritte berechnet worden sind. Dabei kann es sein, dass diese früheren Simulationsdaten ihrerseits rechtzeitig bereitgestellt waren oder nicht rechtzeitig bereitgestellt waren. Die geschätzten Simulationsdaten können aus den früheren Simulationsdaten alleine erstellt werden oder aus den früheren Simulationsdaten unter Zuhilfenahme von weiteren Daten und/oder Randbedingungen. Es ist auch möglich, dass die geschätzten Simulationsdaten auf andere Weise ohne Verwendung früherer Simulationsdaten erstellt werden, wie unten diskutiert.

Die Co-Simulation kann mehrere echtzeitfähige Teilsimulationen und/oder mehrere nicht-echtzeitfähige Teilsimulationen aufweisen. Die Kommunikation zwischen der/den echtzeitfähigen Teilsimulation(en) und der/den nicht-echtzeitfähigen Teilsimulation(en), wie oben beschrieben, kann innerhalb jeder Untergruppe der Teilsimulation stattfinden.

Gemäß einer weiteren Ausführungsform ist die zweite Simulationszeit mit der ersten Simulationszeit über Zeitstempel gekoppelt, wobei die echtzeitfähige Teilsimulation erste Zeitstempel erzeugt und jeder erste Zeitstempel die erste Simulationszeit anzeigt und wobei die nicht-echtzeitfähige Teilsimulation bei Fertigstellung der Berechnung von berechneten Simulationsdaten zweite Zeitstempel erzeugt. Die Zeitstempel können an Simulationsdaten gekoppelt bzw. angehängt sein bzw. zusammen mit Simulationsdaten in einem Datenpaket verpackt sein. So können die echtzeitfähige Teilsimulation und die nicht-echtzeitfähige Teilsimulation jeweils Simulationsdaten zusammen mit Zeitstempeln an die jeweils andere Teilsimulation übermitteln. In anderen Worten, die Simulationsdaten können jeweils mit einem Zeitstempel versehen sein, der den Fertigstellungszeitpunkt der Simulationsdaten anzeigt bzw. auf die verwendeten Simulationsdaten rückschließen lässt.

Gemäß einer weiteren Ausführungsform umfasst das Einstellen der zweiten Simulationszeit auf die erste Simulationszeit ein Erzeugen eines zweiten Zeitstempels, der auf die erste Simulationszeit der letzten von der echtzeitfähigen Teilsimulation erhaltenen und für die Berechnung verwendeten Simulationsdaten gesetzt wird oder der auf die erste Simulationszeit der letzten von der echtzeitfähigen Teilsimulation erhaltenen und für die Berechnung verwendeten Simulationsdaten, inkrementiert um einen vorbestimmten Zeit-Anpassungswert, gesetzt wird. So zeigt der zweite Zeitstempel an, welche der von der echtzeitfähigen Teilsimulation erhaltenen Simulationsdaten verwendet worden sind. Daraus kann die echtzeitfähige Teilsimulation und/oder ein Fehlerbehandlungssystem rückschließen, ob bereitgestellte berechnete Simulationsdaten für den bevorstehenden Makro-Simulationsschritt rechtzeitig sind. Dabei kann der zweite Zeitstempel auf den Zeitstempel der letzten verwendeten Simulationsdaten der echtzeitfähigen Teilsimulation gesetzt sein, wodurch die echtzeitfähige Teilsimulation durch simplen Vergleich feststellen kann, ob die letzten, der nicht-echtzeitfähigen Teilsimulation bereitgestellten Simulationsdaten verwendet worden sind. Es ist auch möglich, dass die nicht-echtzeitfähige Teilsimulation den ersten Zeitstempel der letzten erhaltenen und verwendeten Simulationsdaten von der echtzeitfähigen Teilsimulation um einen vorbestimmten Zeit-Anpassungswert inkrementiert. Insbesondere kann der vorbestimmte Zeit-Anpassungswert derart sein, dass der zweite Zeitstempel mit der erwarteten ersten Simulationszeit bei Erhalt der von der nicht-echtzeitfähigen Teilsimulation bereitgestellten Simulationsdaten übereinstimmt. So kann die echtzeitfähige Teilsimulation durch den Vergleich des zweiten Zeitstempels mit der momentan ersten Simulationszeit feststellen, ob es sich um rechtzeitig bereitgestellte Simulationsdaten handelt.

Gemäß einer weiteren Ausführungsform hat die nicht-echtzeitfähige Teilsimulation einen Eingangsdatenpuffer, und die echtzeitfähige Teilsimulation schreibt Simulationsdaten in den Eingangsdatenpuffer der nicht-echtzeitfähigen Teilsimulation, wobei die zweite Simulationszeit mit der ersten Simulationszeit dadurch in Übereinstimmung gebracht wird, dass alle in den Eingangsdatenpuffer geschriebenen Simulationsdaten für die Fertigstellung von berechneten Simulationsdaten verwendet werden und berechnete Simulationsdaten rechtzeitig für den nächsten bevorstehenden Makro-Simulationsschritt bereitgestellt werden. Somit zeigt die nicht-echtzeitfähige Teilsimulation durch In-Übereinstimmung-Bringen der zweiten Simulationszeit mit der ersten Simulationszeit an, dass der Eingangsdatenpuffer der nicht-echtzeitfähigen Teilsimulation abgearbeitet ist, d.h. leer ist, und die nicht-echtzeitfähige Teilsimulation bei der Berechnung von Simulationsdaten soweit aufgeholt hat, dass berechnete Simulationsdaten wie gewünscht für den bevorstehenden Makro-Simulationsschritt bereitgestellt werden. Bei diesem Aufholen auf die erste Simulationszeit kann man auch von Synchronisierung bzw. Re-Synchronisierung sprechen.

Gemäß einer weiteren Ausführungsform werden der echtzeitfähigen Teilsimulation nur rechtzeitig fertiggestellte berechnete Simulationsdaten von der nicht-echtzeitfähigen Teilsimulation bereitgestellt. So ist für die echtzeitfähige Teilsimulation schon aus dem Vorhandensein bzw. Nicht-Vorhandensein von neuen berechneten Simulationsdaten ersichtlich, ob eine Verspätung vorliegt oder nicht. Die nicht rechtzeitig fertiggestellten berechneten Simulationsdaten können an ein Fehlerbehandlungssystem bereitgestellt werden. Es ist auch möglich, dass alle von der nicht-echtzeitfähigen Teilsimulation berechneten Simulationsdaten, egal ob rechtzeitig oder verspätet, an das Fehlerbehandlungssystem weitergegeben werden. In diesem Fall hat das Fehlerbehandlungssystem eine große Datenbasis, z.B. zum Erstellen von geschätzten Simulationsdaten. Der Weitergabe bzw. der Bereitstellung kann eine Prüfung durch die echtzeitfähige Teilsimulation hervorgehen, ob Simulationsdaten rechtzeitig bereitgestellt wurden.

Dem Bereitstellen der nur rechtzeitig fertiggestellten berechneten Simulationsdaten kann dabei vorausgehen, dass die nicht-echtzeitfähige Teilsimulation unmittelbar vor dem potentiellen Versenden der Simulationsdaten an die echtzeitfähige Teilsimulation prüft, ob die Simulationsdaten rechtzeitig der echtzeitfähigen Teilsimulation bereitgestellt werden können. Sofern die Prüfung ergibt, dass ein rechtzeitiges Bereitstellen der Simulationsdaten für die echtzeitfähige Teilsimulation nicht möglich ist, werden die Simulationsdaten direkt an das Fehlerbehandlungssystem übertragen.

Gemäß einer weiteren Ausführungsform weist die Co-Simulation ein Fehlerbehandlungssystem auf. Das Fehlerbehandlungssystem kann Teil der echtzeitfähigen Teilsimulation sein. Es ist auch möglich, dass das Fehlerbehandlungssystem separat von der echtzeitfähigen Teilsimulation und der nicht-echtzeitfähigen Teilsimulation ist und mit der echtzeitfähigen Teilsimulation sowie der nicht-echtzeitfähigen Teilsimulation in Verbindung steht.

Gemäß einer weiteren Ausführungsform weist das Verfahren weiterhin den folgenden Schritt auf: wenn die nicht-echtzeitfähige Teilsimulation keine berechneten Simulationsdaten für den bevorstehenden Makro-Simulationsschritt bereitgestellt hat, nachträgliches Bereitstellen der berechneten Simulationsdaten für den genannten bevorstehenden Makro-Simulationsschritt an die echtzeitfähige Teilsimulation und/oder an ein Fehlerbehandlungssystem. Die Tatsache, dass die nicht-echtzeitfähige Teilsimulation keine berechneten Simulationsdaten für den bevorstehenden Makro-Simulationsschritt bereitgestellt hat, kann auf einer Rechenleistung-bedingten Verspätung der nicht-echtzeitfähigen Teilsimulation beruhen. Es ist aber auch möglich, dass die Verspätung aus einem anderen Grund erfolgt ist. Durch das nachträgliche Bereitstellen der berechneten Simulationsdaten wird sichergestellt, dass die berechneten Simulationsdaten, wenn auch nicht rechtzeitig, weitergegeben werden und so ein vollständiger Satz von berechneten Simulationsdaten in der echtzeitfähigen Teilsimulation oder/oder in dem Fehlerbehandlungssystem vorliegt. Außerdem wird auf diese Weise dokumentiert bzw. signalisiert, inwieweit die nicht-echtzeitfähige Teilsimulation die Simulationsdaten von der echtzeitfähigen Teilsimulation verarbeitet hat.

Gemäß einer weiteren Ausführungsform weist das Verfahren weiterhin die folgenden Schritte auf: Berechnen eines Schätzfehlers aus den geschätzten Simulationsdaten für den bevorstehenden Makro-Simulationsschritt und den nachträglich bereitgestellten berechneten Simulationsdaten für den genannten bevorstehenden Makro-Simulationsschritt, und nachträgliches Anpassen der echtzeitfähigen Teilsimulation auf Basis des Schätzfehlers und/oder Anpassen des Erstellens von geschätzten Simulationsdaten für spätere Makro-Simulationsschritte. In anderen Worten, der Schätzfehler kann verwendet werden, um Simulationsergebnisse nachträglich zu verbessern und/oder um dafür zu sorgen, dass später benötigte geschätzte Simulationsdaten das Ergebnis einer besseren Schätzung sind. In anderen Worten, der Schätzfehler kann zur Verbesserung der späteren Simulation verwendet werden. Das Anpassen des Erstellens von geschätzten Simulationsdaten für spätere Makro-Simulationsschritte bedeutet, dass der Algorithmus des Erstellens von geschätzten Simulationsdaten auf Basis des Schätzfehlers angepasst wird und dieser angepasste Algorithmus später verwendet wird, wenn wiederum geschätzte Simulationsdaten benötigt werden. Das Berechnen des Schätzfehlers und das Anpassen des Erstellens von geschätzten Simulationsdaten kann in der echtzeitfähigen Teilsimulation oder in einem Fehlerbehandlungssystem oder teilweise in der echtzeitfähigen Teilsimulation und teilweise in dem Fehlerbehandlungssystem erfolgen. Es ist auch möglich, dass das Berechnen des Schätzfehlers und das Anpassen des Erstellens von geschätzten Simulationsdaten ganz oder teilweise in der nicht-echtzeitfähigen Teilsimulation erfolgt.

Gemäß einer weiteren Ausführungsform weist das Verfahren weiterhin den folgenden Schritt auf: wenn die nicht-echtzeitfähige Teilsimulation keine berechneten Simulationsdaten für den bevorstehenden Makro-Simulationsschritt bereitgestellt hat, unmittelbares Erstellen von berechneten Simulationsdaten für einen oder mehrere dem genannten bevorstehenden Makro-Simulationsschritt nachfolgende(n) Makro-Simulationsschritt(e), wobei das unmittelbare Erstellen von berechneten Simulationsdaten so lange durchgeführt wird, bis berechnete Simulationsdaten rechtzeitig an die echtzeitfähige Teilsimulation bereitgestellt werden. Durch das unmittelbare Erstellen von berechneten Simulationsdaten kann ermöglicht werden, dass die nicht-echtzeitfähige Teilsimulation so schnell wie möglich gegenüber der ersten Simulationszeit aufholt. Das unmittelbare Erstellen von berechneten Simulationsdaten für einen oder mehrere dem genannten bevorstehenden Makro-Simulationsschritt nachfolgende(n) Makro-Simulationsschritt(e) bedeutet, dass die nicht-echtzeitfähige Teilsimulation im Wesentlichen alle verfügbare Rechenkapazität darauf verwendet, auf die erste Simulationszeit aufzuholen. Zum Beispiel ist es möglich, keine Rechenzeit durch Leerlauf- oder Schlaf-Zustände zu verschenken.

Gemäß einer weiteren Ausführungsform hat die nicht-echtzeitfähige Teilsimulation eine Rechenleistung, sowie gegebenenfalls weitere die Echtzeitfähigkeit herstellende Eigenschaften, die gemittelt über den gesamten Simulationsverlauf die berechneten Simulationsdaten rechtzeitig bereitstellt. Der Begriff rechtzeitig bezieht sich auf die Rechtzeitigkeit bzw. Verspätung gegenüber dem jeweils bevorstehenden Simulationsschritt der echtzeitfähigen Teilsimulation. Die Ausdrucksweise gemittelt über den gesamten Simulationsverlauf rechtzeitig bedeutet, dass das Delta zwischen dem Fertigstellungszeitpunkt der berechneten Simulationsdaten und dem Zeitpunkt, an dem die echtzeitfähige Teilsimulation die berechneten Simulationsdaten benötigt, im Mittel negativ ist. In anderen Worten, die nicht-echtzeitfähige Teilsimulation ist im Mittel schneller als genau rechtzeitig fertig mit der Berechnung der Simulationsdaten. In noch anderen Worten, die Summe aller Berechnungszeiten der nicht-echtzeitfähigen Teilsimulation ist geringer als die abgelaufene Echtzeit der Simulation. Auf diese Weise ist die nicht-echtzeitfähige Teilsimulation über ihre Rechenleistung in der Lage, die Verspätung bei nicht rechtzeitig fertiggestellten Simulationsdaten aufzuholen und die zweite Simulationszeit mit der ersten Simulationszeit in Übereinstimmung zu bringen, ohne Berechnungen von Simulationsdaten auszulassen. Die nicht-echtzeitfähige Teilsimulation kann auch eine Rechenleistung haben, die bei durchschnittlicher Komplexität des Erstellens der berechneten Simulationsdaten ein rechtzeitiges Bereitstellen der berechneten Simulationsdaten an die echtzeitfähige Teilsimulation erlaubt. So kann die Rechenleistung der nicht-echtzeitfähigen Teilsimulation auch bezüglich eines Makro-Simulationsschritts definiert sein.

Gemäß einer weiteren Ausführungsform kann die echtzeitfähige Teilsimulation in jedem Makro-Simulationsschritt oder in jedem n-ten Makro-Simulationsschritt oder in einer vorgegebenen, teilregelmäßigen Abfolge von Makro-Simulationsschritten überprüfen, ob die nicht-echtzeitfähige Teilsimulation berechnete Simulationsdaten für den jeweils bevorstehenden Makro-Simulationsschritt bereitgestellt hat. Auf diese Weise kann im Vorhinein festgelegt werden, in welchen Intervallen bezüglich der vordefinierten Makro-Schrittweiten eine Datenübergabe von der nicht-echtzeitfähigen Teilsimulation an die echtzeitfähige Teilsimulation stattfinden soll, womit auch die Zeitpunkte genau vordefiniert sind, an denen bestimmt wird, ob eine Verspätung vorliegt oder nicht. Die Variable n ist eine ganzzahlige Zahl, z. B. 2, 3, 4, 5, 6, 7, 8, etc.

Gemäß einer weiteren Ausführungsform wird das Erstellen von geschätzten Simulationsdaten in der echtzeitfähigen Teilsimulation und/oder in der nicht-echtzeitfähigen Teilsimulation und/oder in einem Fehlerbehandlungssystem durchgeführt. In anderen Worten, das Erstellen von geschätzten Simulationsdaten kann inhärenter Teil der echtzeitfähigen Teilsimulation sein oder inhärenter Teil der nicht-echtzeitfähigen Teilsimulation sein oder in einem separaten Fehlerbehandlungssystem implementiert sein oder auf jegliche Kombination von zwei der drei genannten Entitäten, z.B. auf die echtzeitfähige Teilsimulation und das Fehlerbehandlungssystem, oder auf alle drei genannten Entitäten aufgeteilt sein. Somit kann je nach Anwendungsfall, z.B. je nach verfügbarer Rechenkapazität in der echtzeitfähigen Teilsimulation, bestimmt werden, wo die geschätzten Simulationsdaten erstellt werden.

Gemäß einer weiteren Ausführungsform weist das Erstellen von geschätzten Simulationsdaten zumindest einen der folgenden Schritte auf: Extrapolieren der geschätzten Simulationsdaten aus früheren, von der nicht-echtzeitfähigen Teilsimulation zur Verfügung gestellten berechneten Simulationsdaten, insbesondere Extrapolieren nullter, erster oder zweiter Ordnung; Ableiten der geschätzten Simulationsdaten aus einer Kennlinie bzw. aus einem Kennfeld; Erstellen der geschätzten Simulationsdaten auf Basis von früheren Simulationen; Begrenzen der geschätzten Simulationsdaten auf vorbestimmte Minimal- und/oder Maximalwerte; Ausrichten der geschätzten Simulationsdaten an einer vorbestimmten Änderungsdynamik; und Berücksichtigen interner Zustände des echtzeitfähigen Systems. Die genannten Schritte sind Möglichkeiten, die geschätzten Simulationsdaten mit unterschiedlicher Genauigkeit und unterschiedlicher Komplexität zu erstellen. Die genannten Schritte decken eine große Bandbreite von Komplexität ab, beginnend von sehr geringer Komplexität, z.B. reines Extrapolieren nullter Ordnung, bis hin zu mittlerer Komplexität, z.B. Extrapolieren erster Ordnung und Begrenzen der geschätzten Simulationsdaten auf vorbestimmte Minimal- und Maximalwerte, bis hin zu sehr komplexen Schätzsystemen, die beispielsweise eine Vielzahl interner Zustände des echtzeitfähigen Systems berücksichtigen und daraus ableiten, welche Simulationsdaten auf Basis der früheren Simulationsdaten zu erwarten sind. Das Erstellen von geschätzten Simulationsdaten kann so besonders effektiv auf den Einzelfall der echtzeitfähigen Simulation für die Steuergeräteentwicklung angepasst werden. Das Ableiten der geschätzten Simulationsdaten aus einer Kennlinie bzw. einem Kennfeld kann das Erstellen der geschätzten Simulationsdaten ohne Verarbeitung von früheren, von der nicht-echtzeitfähigen Teilsimulation zur Verfügung gestellten berechneten Simulationsdaten ermöglichen. Für das Beispiel einer Motorsimulation als nicht-echtzeitfähige Teilsimulation können gewisse momentane Zustände des Motors aus anderen momentanen Gegebenheiten mittels Kennfeldern geschätzt werden. Das Erstellen der geschätzten Simulationsdaten auf Basis von früheren Simulationen bezieht Erfahrungswerte über das Verhalten von Teilsimulationen aus früheren Simulationsdurchgängen ein, was auch gute Schätzungen erlaubt.

Gemäß einer weiteren Ausführungsform weist das Verfahren weiterhin den folgenden Schritt auf: Protokollieren von Fällen, in denen die nicht-echtzeitfähige Teilsimulation keine berechneten Simulationsdaten für den bevorstehenden Makro-Simulationsschritt fertiggestellt hat und der echtzeitfähigen Teilsimulation bereitgestellt hat. Durch das Protokollieren kann nach Abschluss der Simulation bestimmt werden, ob und inwieweit die Simulation auf geschätzte Simulationsdaten zurückgreifen musste. Somit kann ein Maß für die Zuverlässigkeit der Simulationsergebnisse bereitgestellt werden. Es ist auch möglich, die Simulationsbausteine auf Basis dieser Erkenntnis für weitere Simulationsdurchläufe anzupassen und so für eine hohe Simulationsqualität zu sorgen. Das Protokollieren kann in jeglicher geeigneten Form erfolgen, zum Beispiel durch Ausgeben oder Speichern der genannten Fälle. Insbesondere kann das Protokollieren ein Dokumentieren der Zeitpunkte und/oder der Anzahl der genannten Fälle aufweisen.

Gemäß einer weiteren Ausführungsform simuliert die echtzeitfähige Teilsimulation eine Umgebung eines Steuergeräts und die nicht-echtzeitfähige Teilsimulation ein Steuergerät. Die echtzeitfähige Teilsimulation kann dabei insbesondere ein zusteuerndes technisches System simulieren. Auf diese Weise kann eine recht rudimentäre Modell-mäßige Implementierung eines Steuergeräts, die noch nicht echtzeitfähig ist, zu einem sehr frühen Zeitpunkt der Steuergeräteentwicklung in seiner Umgebung getestet werden, wobei die Bedingungen einem Echtzeittest schon recht nahe kommen.

Gemäß einer weiteren Ausführungsform simuliert die echtzeitfähige Teilsimulation einen ersten Teil einer Umgebung eines Steuergeräts und die nicht-echtzeitfähige Teilsimulation einen zweiten Teil einer Umgebung eines Steuergeräts. Dabei kann die echtzeitfähige Teilsimulation einen ersten Teil eines zu steuernden Systems simulieren und die nicht-echtzeitfähige Teilsimulation einen zweiten Teil eines zu steuernden technischen Systems simulieren. Es ist auch möglich, dass die echtzeitfähige Teilsimulation ein zu steuerndes technisches System simuliert und die nicht-echtzeitfähige Teilsimulation eine Umgebungskomponente des zu steuernden technischen Systems oder des Steuergeräts simuliert, oder andersherum. In den genannten Fällen kann die echtzeitfähige Simulation auf einem HIL-Simulator ausgeführt werden bzw. kann ein HIL-Simulator sein. Der HIL-Simulator kann insbesondere zum Anschluss an ein zu testendes Steuergerät ausgebildet sein, welches entweder schon gerätemäßig implementiert vorliegen kann oder als SW-Modell auf einem externen Gerät vorliegen kann. In beiden Fällen kann das Steuergerät im Rahmen der echtzeitfähigen Gesamtsimulation auf dem HIL-Simulator getestet werden, wobei die Gesamtsimulation auf dem HIL-Simulator mindestens eine nicht-echtzeitfähige Teilsimulation aufweist.

Gemäß einer weiteren Ausführungsform simuliert die nicht-echtzeitfähige Teilsimulation eine Umgebung eines Steuergeräts und die echtzeitfähige Teilsimulation ein Steuergerät. Die nicht-echtzeitfähige Teilsimulation kann dabei insbesondere ein zu steuerndes technisches System simulieren.

Gemäß einer weiteren Ausführungsform ist die nicht-echtzeitfähige Teilsimulation eine eigentlich echtzeitfähige Teilsimulation, die über ein nicht-echtzeitfähiges Medium, z.B. über das Internet oder über ein WLAN, mit der echtzeitfähigen Teilsimulation verbunden ist.

Beispielhafte Ausführungsformen der Erfindung umfassen weiterhin eine Simulationsvorrichtung für die Steuergeräteentwicklung, wobei die Simulationsvorrichtung echtzeitfähig ist und ein Steuergerät oder eine Umgebung eines Steuergeräts oder eine Kombination eines Steuergeräts und einer Umgebung des Steuergeräts simuliert, aufweisend eine echtzeitfähige Teilsimulation mit einer der Echtzeit entsprechenden ersten Simulationszeit; eine mit der echtzeitfähigen Teilsimulation interagierende, nicht-echtzeitfähige Teilsimulation mit einer mit der ersten Simulationszeit gekoppelten, zu Beginn der echtzeitfähigen Simulation mit der ersten Simulationszeit übereinstimmenden, virtuellen zweiten Simulationszeit; und einen Kommunikationspfad, der für einen Austausch von Simulationsdaten zwischen der echtzeitfähigen Teilsimulation und der nicht-echtzeitfähigen Teilsimulation eingerichtet ist. Die nicht-echtzeitfähige Teilsimulation ist eingerichtet, berechnete Simulationsdaten an die echtzeitfähige Teilsimulation bereitzustellen. Die echtzeitfähige Teilsimulation ist eingerichtet ist: zu überprüfen, ob die nicht-echtzeitfähige Teilsimulation berechnete Simulationsdaten für einen bevorstehenden Makro-Simulationsschritt bereitgestellt hat; die berechneten Simulationsdaten für den bevorstehenden Makro-Simulationsschritt zu verwenden, wenn die nicht-echtzeitfähige Teilsimulation berechnete Simulationsdaten für den bevorstehenden Makro-Simulationsschritt fertiggestellt hat und der echtzeitfähigen Teilsimulation bereitgestellt hat; und geschätzte Simulationsdaten für den bevorstehenden Makro-Simulationsschritt zu verwenden, wenn die nicht-echtzeitfähige Teilsimulation keine berechneten Simulationsdaten für den bevorstehenden Simulationsschritt fertiggestellt hat und der echtzeitfähigen Teilsimulation bereitgestellt hat. Die nicht-echtzeitfähige Teilsimulation ist eingerichtet, die zweite Simulationszeit nach Fertigstellung der Berechnung von nicht rechtzeitig bereitgestellten Simulationsdaten auf die erste Simulationszeit einzustellen. Die zusätzlichen Merkmale, Modifikationen und Effekte, die oben mit Bezug auf das Verfahren zum Bereitstellen einer echtzeitfähigen Simulation für die Steuergeräteentwicklung beschrieben worden sind, sind analog auf die Simulationsvorrichtung für die Steuergerätentwicklung anwendbar.

Gemäß einer weiteren Ausführungsform weist die nicht-echtzeitfähige Teilsimulation einen oder mehrere Prozessoren bzw. Prozessorkerne auf, der bzw. die eine Rechenleistung hat/haben, die ausreichend ist, die berechneten Simulationsdaten gemittelt über den gesamten Simulationsverlauf rechtzeitig bereitzustellen.

Weitere beispielhafte Ausführungsformen werden mit Bezug auf die beigefügten Figuren beschrieben.
Fig. 1 zeigt eine Simulationsvorrichtung mit einem daran angeschlossenen, zu testenden Steuergerät in einem Blockdiagramm, wobei auf der Simulationsvorrichtung ein Verfahren zum Bereitstellen einer echtzeitfähigen Simulation gemäß beispielhafter Ausführungsformen der Erfindung ausgeführt werden kann;
Fig. 2 zeigt eine echtzeitfähige Simulation, die durch ein Verfahren gemäß beispielhafter Ausführungsformen der Erfindung bereitgestellt wird, in einem Blockdiagramm;
Fig. 3 zeigt den Datenfluss zwischen einer echtzeitfähigen Teilsimulation und einer nicht-echtzeitfähigen Teilsimulation bei einem Verfahren zum Bereitstellen einer echtzeitfähigen Simulation gemäß einer beispielhaften Ausführungsform in einem Ablaufdiagramm;
Fig.4 illustriert verschiedene Muster von Kopplungspunkten zwischen einer echtzeitfähigen Teilsimulation und einer nicht-echtzeitfähigen Teilsimulation, wie sie in Verfahren gemäß beispielhaften Ausführungsformen der Erfindung vorliegen können.

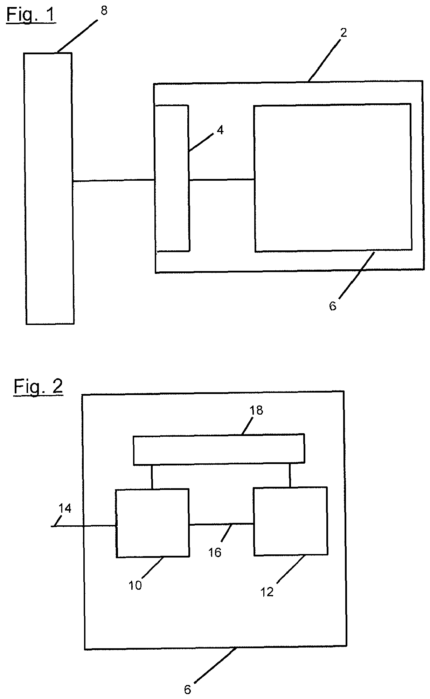

Fig. 1 zeigt eine Simulationsvorrichtung 2, welche im vorliegenden Fall ein HIL-Simulator 2 ist. Der HIL-Simulator 2 hat eine physikalische Schnittstelle 4, über die externe Geräte an den HIL-Simulator 2 anschließbar sind. In Fig. 1 ist ein Steuergerät 8 an die physikalische Schnittstelle 4 angeschlossen. In dem Beispiel von Fig. 1 ist das Steuergerät 8 ein Motorsteuergerät, das zum Steuern des Motors eines Kraftfahrzeugs eingerichtet ist. Der HIL-Simulator 2 ist zum Testen des Motorsteuergeräts 8 eingerichtet.

Der HIL-Simulator 2 beinhaltet eine echtzeitfähige Simulation 6 eines technischen Systems. In dem Beispiel von Fig. 1 ist die echtzeitfähige Simulation 6 ein Modell einer Kombination eines Motors und eines Getriebes. Die echtzeitfähige Simulation 6 kann auch als eine Simulation der Umgebung des Steuergeräts 8 bezeichnet werden, weil es die Betriebsumgebung des Steuergeräts 8, d.h. zumindest einen Teil der mit dem Steuergerät 8 im realen Betrieb in Beziehung stehenden Komponenten, simuliert. Die echtzeitfähige Simulation 6 liegt als Software-Modell vor und kann mit der physikalischen Schnittstelle 4 Daten austauschen. So ergibt sich eine Datenverbindung zwischen dem Steuergerät 8 und der echtzeitfähigen Simulation 6, wodurch die Interaktion dieser beiden Komponenten simuliert und getestet werden kann. Dabei übernimmt die physikalische Schnittstelle 4 den Übergang zwischen den von und zu dem Steuergerät übertragenen physikalischen Signalen und den innerhalb des HIL-Simulators 2 ausgetauschten logischen, d.h. Softwarebasierten, Signalen.

Der HIL-Simulator ist echtzeitfähig. Somit kann das Steuergerät 8 ohne weitere Anpassung, sprich in seiner später im Betrieb eingesetzten Konfiguration, getestet werden. Der HIL-Simulator 2 interagiert in derjenigen Geschwindigkeit mit dem Steuergerät 8, die ein gegenständlich vorhandenes technisches System, im vorliegenden Fall eine Kombination aus realem Motor und Getriebe eines Kraftfahrzeugs, hätte. Das bedeutet wiederum, dass das Verhalten der echtzeitfähigen Simulation 6 bezüglich seiner Eingaben und Ausgaben gegenüber dem Steuergerät 8 auch in mindestens dieser Geschwindigkeit berechnet wird. Die echtzeitfähige Simulation 6 ist ein ausführbares Modell, das zum Testen des Steuergeräts 8 auf der Hardware des HIL-Simulators 2 ausgeführt werden kann.

Fig. 2 zeigt die echtzeitfähige Simulation 6 des technischen Systems aus Fig. 1 in größerem Detail. Die echtzeitfähige Simulation 6 hat eine echtzeitfähige Teilsimulation 10 und eine nicht-echtzeitfähige Teilsimulation 12. Die echtzeitfähige Teilsimulation 10 und die nicht-echtzeitfähige Teilsimulation 12 bilden zusammen eine echtzeitfähige Co-Simulation. Die echtzeitfähige Teilsimulation 10 simuliert den Motor, den das angeschlossene Steuergerät 8 steuert. Somit simuliert die echtzeitfähige Simulation 10 das zu steuernde technische System. Die echtzeitfähige Teilsimulation 10 ist über den Datenpfad 14 mit der physikalischen Schnittstelle 4 und somit mit dem Steuergerät 8 verbunden. Die echtzeitfähige Simulation 6 ist somit nach außen, d.h. dem Steuergerät 8 gegenüber, echtzeitfähig. Die nicht-echtzeitfähige Teilsimulation 12 simuliert das Getriebe des Kraftfahrzeugs. Die nicht-echtzeitfähige Teilsimulation simuliert somit eine Umgebungskomponente des Motors bzw. des Motorsteuergeräts. Das Steuergerät 8 kann mit Bezug auf den Motor in Kombination mit dem Getriebe getestet werden.

Die echtzeitfähige Teilsimulation 10 und die nicht-echtzeitfähige Teilsimulation 12 sind über einen Datenpfad 16 verbunden und tauschen über den Datenpfad 16 Simulationsdaten aus. Die nicht-echtzeitfähige Teilsimulation 12 simuliert das Verhalten des Getriebes auf Basis der Simulationsdaten von der echtzeitfähigen Teilsimulation 10, ggf. unter Einbeziehung weiterer Eingaben von nicht dargestellten Komponenten bzw. unter Einbeziehung einer Abfolge vorbestimmter Simulationszustände. Die echtzeitfähige Teilsimulation 10 simuliert das Verhalten des Motors 10 auf Basis der Simulationsdaten der nicht-echtzeitfähigen Teilsimulation 12 und der Eingaben des Steuergeräts 8, ggf. unter Einbeziehung weiterer Eingaben von nicht dargestellten Komponenten bzw. unter Einbeziehung einer Abfolge vorbestimmter Simulationszustände. Außerdem empfängt die echtzeitfähige Teilsimulation 10 weitere Daten von dem Fehlerbehandlungssystem 18, wie unten beschrieben.

Im vorliegenden Beispiel werden die echtzeitfähige Teilsimulation 10 und die nicht-echtzeitfähige Teilsimulation 12 während der Simulation auf separaten Prozessoren ausgeführt. So können die Berechnungen für die echtzeitfähige Teilsimulation 10 und die nicht-echtzeitfähige Teilsimulation 12 vollkommen parallel ausgeführt werden. Es ist auch möglich, dass die echtzeitfähige Teilsimulation 10 und die nicht-echtzeitfähige Teilsimulation 12 auf demselben Prozessor, aber in separaten Prozessorkernen ausgeführt werden. Außerdem ist es möglich, dass die echtzeitfähige Teilsimulation 10 und die nicht-echtzeitfähige Teilsimulation 12 unterschiedliche Adressräume besitzen, wobei sie auf demselben Prozessor oder auf unterschiedlichen Prozessoren ausgeführt werden.

Zur möglichst klaren Illustration einer beispielhaften Ausführungsform der Erfindung sind lediglich die echtzeitfähige Teilsimulation 10 und die nicht-echtzeitfähige Teilsimulation 12 in Fig. 2 gezeigt. Es ist für den Fachmann jedoch ersichtlich, dass weitere Teilsimulationen, sowohl echtzeitfähig als auch nicht-echtzeitfähig, in dem HIL-Simulator vorhanden sein können, aus denen die echtzeitfähige Simulation 6 aufgebaut sein kann.

Die echtzeitfähige Simulation 6 weist weiterhin ein Fehlerbehandlungssystem 18 auf. Die nicht-echtzeitfähige Teilsimulation 12 übermittelt für die echtzeitfähige Teilsimulation 10 berechnete, aber nicht rechtzeitig fertiggestellte Simulationsdaten an das Fehlerbehandlungssystem 18. Für die echtzeitfähige Teilsimulation 10 rechtzeitig fertiggestellte Simulationsdaten werden sowohl an die echtzeitfähige Teilsimulation 10 als auch an das Fehlerbehandlungssystem 18 übermittelt. Für den Fall, dass die nicht-echtzeitfähige Teilsimulation 12 keine berechneten Simulationsdaten rechtzeitig für die echtzeitfähige Teilsimulation 10 fertiggestellt hat, übermittelt das Fehlerbehandlungssystem 18 geschätzte Simulationsdaten an die echtzeitfähige Teilsimulation 10. Ein beispielhafter Simulationsdatenfluss zwischen der echtzeitfähigen Teilsimulation 10, der nicht-echtzeitfähigen Teilsimulation 12 und dem Fehlerbehandlungssystem 18 wird unten im Detail beschrieben. Es wird betont, dass das Fehlerbehandlungssystem auch in die echtzeitfähige Teilsimulation 10 oder die nicht-echtzeitfähige Teilsimulation 12 integriert sein kann, d.h. ein integraler Bestandteil von einer der Teilsimulationen sein kann, oder auch bezüglich seiner Funktionalität auf die beiden Teilsimulationen aufgeteilt sein kann.

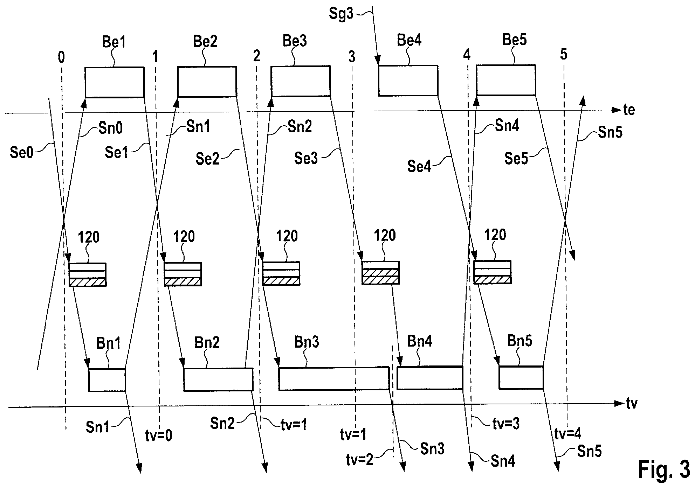

Fig. 3 illustriert den Datenaustausch zwischen einer echtzeitfähigen Teilsimulation, wie z.B. der echtzeitfähigen Teilsimulation 10 aus Fig. 2, und einer nicht-echtzeitfähigen Teilsimulation, wie z.B. der nicht-echtzeitfähigen Teilsimulation 12 aus Fig. 2, und einem Fehlerbehandlungssystem, wie z.B. dem Fehlerbehandlungssystem 18 aus Fig. 2. Der illustrierte Datenaustausch betrifft fünf Makro-Simulationsschritte während des Ausführens einer Simulation. Die illustrierten Mechanismen ermöglichen das Bereitstellen einer insgesamt echtzeitfähigen Simulation. Somit handelt es sich bei dem in Fig. 3 illustrierten Verfahren um ein Verfahren zum Bereitstellen einer echtzeitfähigen Simulation für die Steuergeräteentwicklung gemäß einer beispielhaften Ausführungsform der Erfindung.

Fig. 3 zeigt zwei Zeitachsen. Im oberen Bereich der Fig. 3 ist die erste Simulationszeit te der echtzeitfähigen Teilsimulation aufgetragen. Die Bezeichnung te bringt zum Ausdruck, dass die erste Simulationszeit mit der Echtzeit übereinstimmt. In Fig. 3 sind fünf Makro-Simulationsschritte gezeigt. Die Zeit ist dimensionslos als Länge eines Makro-Simulationsschritts angegeben. Somit läuft die in Fig. 3 gezeigte Zeitachse für die erste Simulationszeit von 0 bis 5. Die Grenzen zwischen den Makro-Simulationsschritten, d.h. die ganzzahligen Zeitintervalle, sind in Fig. 3 mit Strichlinien eingezeichnet. Während der einzelnen Makro-Simulationsschritte simuliert die echtzeitfähige Teilsimulation jeweils das Verhalten der simulierten Entität, z.B. des Motors in dem oben beschriebenen Beispiel der Fig. 1 und 2. Die jeweiligen Berechnungen sind in Fig. 3 als Blöcke dargestellt, wobei die Berechnung im ersten Simulationsschritt mit Be1 bezeichnet ist, die Berechnung im zweiten Makro-Simulationsschritt mit Be2 bezeichnet ist, die Berechnung im dritten Makro-Simulationsschritt mit Be3 bezeichnet ist, die Berechnung im vierten Simulationsschritt mit Be4 bezeichnet ist und die Berechnung im fünften Makro-Simulationsschritt mit Be5 bezeichnet ist. Die echtzeitfähige Teilsimulation ist definitionsgemäß echtzeitfähig, so dass die Berechnungen des jeweiligen Makro-Simulationsschrittes immer innerhalb der Zeitgrenzen des Makro-Simulationsschrittes fertiggestellt sind.

In dem unteren Bereich der Fig. 3 ist die zweite Simulationszeit tv aufgetragen. Die zweite Simulationszeit tv ist die Simulationszeit der nicht-echtzeitfähigen Teilsimulation. Da die zweite Simulationszeit nicht direkt an die Echtzeit gekoppelt ist, sondern nur mittelbar über die erste Simulationszeit te, wird sie auch als virtuelle Simulationszeit tv bezeichnet. Die nicht-echtzeitfähige Teilsimulation simuliert in den jeweiligen Makro-Simulationsschritten das Verhalten des zugrunde liegenden Systems, z.B. des Getriebes in dem oben beschriebenen Beispiel der Fig. 1 und 2. Die dem ersten Makro-Simulationsschritt zugehörigen Berechnungen sind mit Bn1 bezeichnet, die dem zweiten Makro-Simulationsschritt zugehörigen Berechnungen mit Bn2, die dem dritten Makro-Simulationsschritt zugehörigen Berechnungen mit Bn3, die dem vierten Makro-Simulationsschritt zugehörigen Berechnungen mit Bn4 und die dem fünften Makro-Simulationsschritt zugehörigen Berechnungen mit Bn5. Die Berechnungen sind als zu einem bestimmten Makro-Simulationsschritt zugehörig bezeichnet, weil die nicht-echtzeitfähige Teilsimulation versucht, die Berechnungen in dem gegebenen Makro-Simulationsschritt auszuführen. Da die nicht-echtzeitfähige Teilsimulation jedoch definitionsgemäß nicht echtzeitfähig ist, können sich die Berechnungen auch in andere Makro-Simulationsschritte verschieben, wie unten im Detail ausgeführt wird.

Die echtzeitfähige Teilsimulation und die nicht-echtzeitfähige Teilsimulation tauschen während des Ablaufs der Simulation Simulationsdaten untereinander aus. Die von der echtzeitfähigen Teilsimulation im ersten Makro-Simulationsschritt erstellten und an die nicht-echtzeitfähige Teilsimulation übertragenen Daten werden mit Se1 bezeichnet und sind durch einen entsprechenden Pfeil in Fig. 3 illustriert. Die im zweiten Makro-Simulationsschritt von der echtzeitfähigen Teilsimulation erstellten und an die nicht-echtzeitfähige Teilsimulation bereitgestellten Simulationsdaten werden mit Se2 bezeichnet, usw. Insgesamt sind in Fig. 3 sechs Sätze von von der echtzeitfähigen Teilsimulation bereitgestellten Simulationsdaten Se0, Se1, Se2, Se3, Se4, Se5 und Se6 gezeigt. Analog werden die in der dem ersten Makro-Simulationsschritt zugehörigen Berechnung berechneten Simulationsdaten der nicht-echtzeitfähigen Teilsimulation mit Sn1 bezeichnet, die in der dem zweiten Makro-Simulationsschritt zugehörigen Berechnung berechneten Simulationsdaten der nicht-echtzeitfähigen Teilsimulation mit Sn2 bezeichnet, usw. Insgesamt sind in Fig. 3 sechs Sätze von von der nicht-echtzeitfähigen Teilsimulation bereitgestellten Simulationsdaten Sn0, Sn1, Sn2, Sn3, Sn4 und Sn5 gezeigt.

In der beispielhaften Ausführungsform der Fig. 3 hat die nicht-echtzeitfähige Teilsimulation einen Eingangsdatenpuffer 120. Die Belegung dieses Eingangsdatenpuffers 120 ist für jeden Makro-Simulationsschritt in Fig. 3 illustriert. Insbesondere ist dabei illustriert, dass die von der echtzeitfähigen Teilsimulation bereitgestellten Simulationsdaten zuerst in den Eingangsdatenpuffer 120 geschrieben werden, bevor sie für die Berechnung in der nicht-echtzeitfähigen Teilsimulation herangezogen werden. Die echtzeitfähige Teilsimulation kann ebenfalls einen Eingangsdatenpuffer haben, welcher jedoch aus Übersichtlichkeitsgründen in Fig. 3 nicht dargestellt ist.

Der Ablauf der Simulation, insbesondere der Datenfluss zwischen der echtzeitfähigen Teilsimulation und der nicht-echtzeitfähigen Teilsimulation wird im Folgenden mit Bezug auf Fig. 3 entlang der dargestellten Zeitachsen beschrieben. Um den Zeitpunkt 0 herum empfängt die echtzeitfähige Teilsimulation Simulationsdaten Sn0 von der nicht-echtzeitfähigen Teilsimulation, und die nicht-echtzeitfähige Teilsimulation empfängt Simulationsdaten Se0 von der echtzeitfähigen Teilsimulation. Der Zeitpunkt 0 ist willkürlich mit dem Wert 0 bezeichnet. Es kann sich bei diesem Zeitpunkt auch um irgendeinen Zwischenzeitpunkt bei dem Ablauf der Simulation handeln. Der Zeitpunkt könnte somit generell auch mit i oder einer anderen generischen Variable bezeichnet sein. Es geht lediglich darum, dass es für die nachfolgenden Makro-Simulationsschritte einen Referenzzeitpunkt gibt. Die zweite Simulationszeit stimmt zu dem Zeitpunkt 0 mit der ersten Simulationszeit überein, d.h. die echtzeitfähige Teilsimulation und die nicht-echtzeitfähige Teilsimulation tauschen zu diesem Kopplungszeitpunkt wie gewünscht Simulationsdaten aus. Im Allgemeinen sind alle mit Strichlinien versehenen Zeitpunkte 0, 1, 2, 3, 4 und 5 als Kopplungszeitpunkte dazu vorgesehen, Simulationsdaten auszutauschen.

In dem ersten Makro-Simulationsschritt, d.h. in dem Zeitintervall zwischen te = 0 und te = 1, verarbeitet die echtzeitfähige Teilsimulation die von der nicht-echtzeitfähigen Teilsimulation berechneten Simulationsdaten Sn0 und erstellt die Simulationsdaten Se1 zur Übergabe an die nicht-echtzeitfähige Teilsimulation. Zusammen mit den berechneten Simulationsdaten Se1 überträgt die echtzeitfähige Teilsimulation einen Zeitstempel, der anzeigt, dass die erste Simulationszeit 1 ist, d.h. dass te = 1 ist. Auch die nicht-echtzeitfähige Teilsimulation schafft es in dem Beispiel der Fig. 3, in dem ersten Makro-Simulationsschritt die Simulationsdaten Se0 zu verarbeiten und berechnete Simulationsdaten Sn1 fertigzustellen und der echtzeitfähigen Teilsimulation bereitzustellen. Nach der Fertigstellung der berechneten Simulationsdaten Sn1 setzt die nicht-echtzeitfähige Teilsimulation die zweite Simulationszeit tv auf den Wert 0, d.h. auf den Wert des Zeitstempels der letzten, von der echtzeitfähigen Teilsimulation erhaltenen Simulationsdaten. Weiterhin löscht die nicht-echtzeitfähige Teilsimulation die verwendeten Simulationsdaten aus dem Eingangsdatenpuffer 120, wodurch der Eingangsdatenpuffer 120 in Folge der Fertigstellung der berechneten Simulationsdaten Sn1 leer ist. Die Leere des Eingangsdatenpuffers 120 und das Setzen der zweiten Simulationszeit auf den Wert 0 zeigen an, dass sich die nicht-echtzeitfähige Teilsimulation zu dem Kopplungszeitpunkt 1 echtzeitfähig verhält und dass die zweite Simulationszeit mit der ersten Simulationszeit in Übereinstimmung ist.

Alternativ kann die nicht-echtzeitfähige Teilsimulation auch so konfiguriert sein, dass der Zeitstempel der letzten, von der echtzeitfähigen Teilsimulation empfangenen Simulationsdaten um 1 inkrementiert wird, so dass zum Kopplungszeitpunkt 1 auch die zweite Simulationszeit auf den Wert 1 gesetzt wäre. Da das Gesamtsystem weiß, ob eine solche Inkrementierung stattfindet oder nicht, kommt in beiden Fällen die gleiche Information bei der echtzeitfähigen Teilsimulation an, nämlich dass die nicht-echtzeitfähige Teilsimulation sich für den Moment echtzeitfähig verhält.

Neben der Übermittlung der berechneten Simulationsdaten Sn1 an die echtzeitfähige Teilsimulation übermittelt die nicht-echtzeitfähige Teilsimulation die berechneten Simulationsdaten Sn1 auch an das Fehlerbehandlungssystem, was durch den nach unten gerichteten Pfeil in Fig. 3 illustriert ist. Aufgrund des Zeitstempels von tv = 0, der mit den berechneten Simulationsdaten Sn1 verknüpft ist, weiß das Fehlerbehandlungssystem, dass die berechneten Simulationsdaten Sn1 rechtzeitig an die echtzeitfähige Teilsimulation übermittelt worden sind. Demzufolge ist keine Fehlerbehandlung zu diesem Zeitpunkt nötig.

Der zweite Makro-Simulationsschritt, d.h. das Zeitintervall zwischen te = 1 und te = 2, läuft in dem vorliegenden Beispiel der Fig. 3 analog zu dem ersten Makro-Simulationsschritt ab.

Auf Seiten der echtzeitfähigen Teilsimulation läuft auch der dritte Makro-Simulationsschritt, d.h. das Zeitintervall zwischen te = 2 und te = 3 analog zu dem ersten und zweiten Makro-Simulationsschritt ab. Allerdings schafft es die nicht-echtzeitfähige Teilsimulation in dem vorliegenden Beispiel der Fig. 3 im dritten Makro-Simulationsschritt nicht, die berechneten Simulationsdaten Sn3 innerhalb des dritten Makro-Simulationsschritts fertigzustellen und der echtzeitfähigen Teilsimulation bereitzustellen. Somit steht die zweite Simulationszeit zu Ende des dritten Makro-Simulationsschritts weiterhin auf dem Wert 1, d.h. tv = 1. Die echtzeitfähige Teilsimulation stellt bei ihrer Überprüfung, ob die nicht-echtzeitfähige Teilsimulation die berechneten Simulationsdaten Sn3 bereitgestellt hat, fest, dass diese Bereitstellung nicht erfolgt ist. Dies hat auch das Fehlerbehandlungssystem festgestellt, weil bis zum Zeitpunkt 3 keine berechneten Simulationsdaten Sn3 in dem Fehlerbehandlungssystem eingetroffen sind.

Das Fehlerbehandlungssystem erstellt daher auf Basis der vorherigen berechneten Simulationsdaten Sn1 und Sn2 geschätzte Simulationsdaten Sg3 für den vierten Makro-Simulationsschritt. Diese geschätzten Simulationsdaten Sg3 werden der echtzeitfähigen Teilsimulation für die Berechnung Be4 in dem vierten Makro-Simulationsschritt zur Verfügung gestellt. Somit kann die echtzeitfähige Teilsimulation die Berechnung Be4 im vierten Makro-Simulationsschritt ohne Verzögerung aufnehmen. Dadurch wird sichergestellt, dass die echtzeitfähige Teilsimulation am Ende des vierten Makro-Simulationsschritt im Rahmen ihrer Echtzeitanforderungen Ausgangsdaten produziert.

Das Fehlerbehandlungssystem schätzt die geschätzten Simulationsdaten Sg3 auf Basis der vorherigen berechneten Simulationsdaten Sn1 und Sn2. Die geschätzten Simulationsdaten können auf eine Vielzahl von Arten erzeugt werden. Beispielsweise ist es möglich, dass eine lineare oder quadratische Extrapolation, d.h. eine Extrapolation erster oder zweiter Ordnung, auf Basis der früheren berechneten Simulationsdaten Sn1 und Sn2 erstellt wird. Wenn mehrere Variablen übergeben werden, kann die Extrapolation für jede Variable einzeln erfolgen. Es ist aber auch möglich, dass Wechselwirkungen zwischen den einzelnen Variablen in Betracht gezogen werden und in die Schätzung einbezogen werden. Auch können weitere Informationen, wie z.B. eine Begrenzung des Wertebereichs der Simulationsdaten, berücksichtigt werden oder eine Berücksichtigung der Zustände der echtzeitfähigen Teilsimulation oder andere Maßnahmen, wie oben beschrieben, erfolgen.

Die im dritten Makro-Simulationsschritt von der echtzeitfähigen Teilsimulation berechneten Simulationsdaten Se3 werden zum Zeitpunkt 3 in den Eingangsdatenpuffer 120 der nicht-echtzeitfähigen Teilsimulation geschrieben. Da die zu dem dritten Makro-Simulationsschritt gehörige Berechnung Bn3 der nicht-echtzeitfähigen Teilsimulation zu diesem Zeitpunkt noch nicht fertiggestellt ist und die dafür verwendeten Daten noch nicht aus dem Eingangsdatenpuffer 120 gelöscht worden sind, sind nun zwei Sätze von Simulationsdaten in dem Eingangsdatenpuffer 120 vorhanden.

Im vorliegenden Beispiel beendet die nicht-echtzeitfähige Teilsimulation die zu dem dritten Makro-Simulationsschritt gehörige Berechnung Bn3 irgendwann in der Mitte des vierten Makro-Simulationsschritts. Als Folge davon wird die zweite Simulationszeit auf den Wert 2 gesetzt, d.h. tv = 2, und die in dem zweiten Makro-Simulationsschritt von der echtzeitfähigen Teilsimulation berechneten Simulationsdaten Se2 werden aus dem Eingangsdatenpuffer 120 gelöscht.

Die verspätet fertiggestellten berechneten Simulationsdaten Sn3 werden an das Fehlerbehandlungssystem übermittelt. Das Fehlerbehandlungssystem vergleicht daraufhin die geschätzten Simulationsdaten Sg3 mit den berechneten Simulationsdaten Sn3. Aus dem Vergleich der geschätzten Simulationsdaten Sg3 und der berechneten Simulationsdaten Sn3 zieht das Fehlerbehandlungssystem Rückschlüsse auf die Qualität der Schätzung. Gegebenenfalls passt das Fehlerbehandlungssystem den Algorithmus zum Erstellen von geschätzten Simulationsdaten für spätere Makro-Simulationsschritte an. So wird dem Fehlerbehandlungssystem über eine Rückkopplungsschleife eine große Datenmenge zur Verfügung gestellt, mit der das Erstellen geschätzter Simulationsdaten und somit die Genauigkeit der Simulation verbessert werden kann.

Die Simulationsdaten Se3 sind zu dem Zeitpunkt der Fertigstellung der berechneten Simulationsdaten Sn3 noch im Eingangsdatenpuffer 120 vorhanden. Dies ist für die nicht-echtzeitfähige Teilsimulation das Signal, unmittelbar den nächsten Berechnungsschritt vorzunehmen, d.h. unmittelbar die zu dem vierten Makro-Simulationsschritt gehörige Berechnung Bn4 vorzunehmen. In dem Beispiel der Fig. 3 ist die nicht-echtzeitfähige Teilsimulation in der Lage, die Berechnung Bn4 vor dem Zeitpunkt 4 abzuschließen, so dass bis zum Zeitpunkt 4 der Eingangsdatenpuffer 120 geleert ist und die zweite Simulationszeit auf den Wert 3 gesetzt wird, d.h. tv = 3. In anderen Worten, die nicht-echtzeitfähige Teilsimulation schafft es innerhalb des vierten Makro-Simulationsschritts, gegenüber der echtzeitfähigen Teilsimulation aufzuholen und für den folgenden Makro-Simulationsschritt die berechneten Simulationsdaten Sn4 rechtzeitig bereitzustellen. Die zweite Simulationszeit ist in Übereinstimmung mit der ersten Simulationszeit gebracht, d.h. die nicht-echtzeitfähige Teilsimulation ist mit der echtzeitfähigen Teilsimulation synchronisiert bzw. re-synchronisiert.

Der fünfte Makro-Simulationsschritt, d.h. das Zeitintervall zwischen te = 4 und te = 5, läuft dann wiederum analog zu dem ersten und dem zweiten Makro-Simulationsschritt ab.

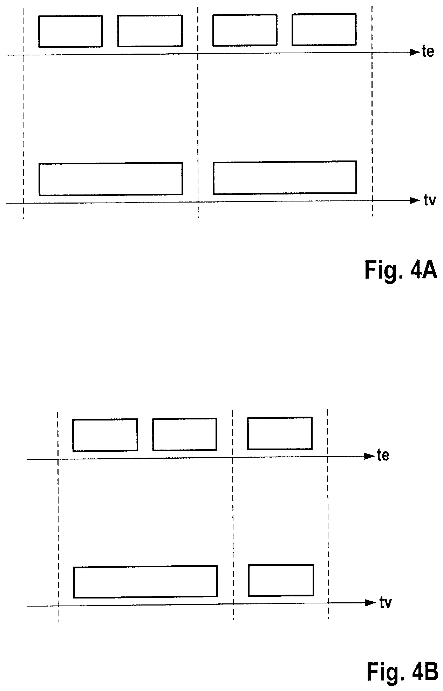

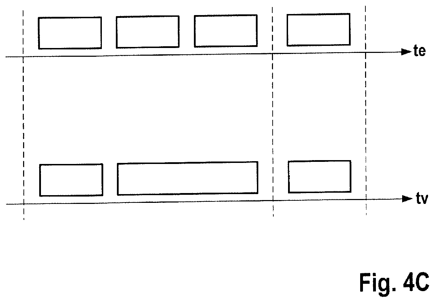

Fig. 4 illustriert in den Fig. 4A, 4B und 4C verschiedene Muster von Kopplungspunkten zwischen einer echtzeitfähigen Teilsimulation und einer nicht-echtzeitfähigen Teilsimulation, wie sie in Verfahren gemäß beispielhaften Ausführungsformen der Erfindung vorliegen können. Der Datenfluss zwischen der jeweils oben dargestellten echtzeitfähigen Teilsimulationen und den jeweils unten dargestellten nicht-echtzeitfähigen Teilsimulationen ist in Fig. 4 nicht dargestellt. Es versteht sich, dass der Datenaustausch nach dem Muster der Fig. 3 ablaufen kann und dass das Verhalten des Gesamtsystems bei nicht rechtzeitig von der nicht-echtzeitfähigen Teilsimulation bereitgestellten Simulationsdaten analog zu dem mit Bezug zu Fig. 3 beschriebenen Verhalten ist.

In Fig. 4A sind die Makro-Simulationsschritte der echtzeitfähigen Teilsimulation im Normalfall ungefähr halb so lang wie die Makro-Simulationsschritte der nicht-echtzeitfähigen Teilsimulation. Aus Sicht der echtzeitfähigen Teilsimulation findet der Austausch von Simulationsdaten somit nach jedem zweiten Makro-Simulationsschritt statt. Die Kopplungspunkte sind auch in Fig. 4A gestrichelt eingezeichnet.

In Fig. 4B entspricht die Abfolge der Makro-Simulationsschritte der echtzeitfähigen Teilsimulation der Abfolge in Fig. 4A, auch wenn nur drei statt vier Makro-Simulationsschritte dargestellt sind. In der nicht-echtzeitfähigen Teilsimulation ist jeder zweite Makro-Simulationsschritt ungefähr doppelt so lang wie der vorhergehende Makro-Simulationsschritt. In anderen Worten, vergleichsweise kurze und vergleichsweise lange Makro-Simulationsschritte wechseln sich in der nicht-echtzeitfähigen Teilsimulation ab. Das gezeigte Muster setzt sich periodisch fort. Aus Sicht der echtzeitfähigen Teilsimulation findet der Datenaustausch abwechselnd nach zwei und nach einem Makro-Simulationsschritt statt. Die echtzeitfähige Teilsimulation überprüft in diesem Muster, ob die nicht-echtzeitfähige Teilsimulation berechnete Simulationsdaten fertiggestellt und der echtzeitfähigen Teilsimulation bereitgestellt hat.

Fig. 4C zeigt eine weiteres Beispiel einer möglichen Abfolge von Makro-Simulationsschritten in der nicht-echtzeitfähigen Teilsimulation. Auch hier setzt sich das gezeigte Muster periodisch fort. Ein vergleichsweise langer Makro-Simulationsschritt der nicht-echtzeitfähigen Teilsimulation ist von zwei vergleichsweise kurzen Makro-Simulationsschritten gefolgt. Aus Sicht der echtzeitfähigen Teilsimulation findet der Datenaustausch abwechselnd nach drei und nach einem Makro-Simulationsschritt statt. Die echtzeitfähige Teilsimulation überprüft in diesem Muster, ob die nicht-echtzeitfähige Teilsimulation berechnete Simulationsdaten fertiggestellt und der echtzeitfähigen Teilsimulation bereitgestellt hat.

Die Fig. 4A, 4B und 4C illustrieren, dass die Kopplungspunkte zwischen der echtzeitfähigen Teilsimulation und der nicht-echtzeitfähigen Teilsimulation auf vielerlei verschiedene Weisen definiert sein können. Je nach vorbestimmtem Muster wissen die echtzeitfähige Teilsimulation und die nicht-echtzeitfähige Teilsimulation, zu welchen Zeitpunkten sie Simulationsdaten übermitteln sollen und zu welchen Zeitpunkten die echtzeitfähige Teilsimulation überprüfen soll, ob die nicht-echtzeitfähige Teilsimulation Simulationsdaten bereitgestellt hat. Die Fehlerbehandlung läuft so ab, wie oben mit Bezug zu Fig. 3 beschrieben.

Obwohl die Erfindung mit Bezug auf beispielhafte Ausführungsformen beschrieben worden ist, ist es für einen Fachmann ersichtlich, dass verschiedene Änderungen vorgenommen und Äquivalente verwendet werden können, ohne den Bereich der Erfindung zu verlassen. Die Erfindung soll nicht durch die beschriebenen spezifischen Ausführungsformen beschränkt sein. Vielmehr enthält sie alle Ausführungsformen, die unter die angehängten Patentansprüche fallen.

## Patentansprüche

1. Verfahren zum Bereitstellen einer echtzeitfähigen Simulation (6) für die Steuergerätentwicklung, wobei die echtzeitfähige Simulation (6) ein Steuergerät oder eine Umgebung eines Steuergeräts oder eine Kombination eines Steuergeräts und einer Umgebung des Steuergeräts simuliert, wobei die echtzeitfähige Simulation (6) eine Co-Simulation einer echtzeitfähigen Teilsimulation (10) und einer mit der echtzeitfähigen Teilsimulation interagierenden, nicht-echtzeitfähigen Teilsimulation (12) aufweist, wobei die echtzeitfähige Teilsimulation (10) und die nicht-echtzeitfähige Teilsimulation (12) zur Kommunikation von Simulationsdaten (Se0, Sn0, Se1, Sn1, Se2, Sn2, Se3, Sn3, Se4, Sn4, Se5, Sn5) ausgebildet sind, wobei die echtzeitfähige Teilsimulation (10) eine der Echtzeit entsprechende erste Simulationszeit (te) aufweist und die nicht-echtzeitfähige Teilsimulation (12) eine mit der ersten Simulationszeit gekoppelte, zu Beginn der echtzeitfähigen Simulation mit der ersten Simulationszeit übereinstimmende, virtuelle zweite Simulationszeit (tv) aufweist, wobei das Verfahren die folgenden Schritte aufweist:
(a) auf Seiten der echtzeitfähigen Teilsimulation (10), Überprüfen, ob die nicht-echtzeitfähige Teilsimulation (12) berechnete Simulationsdaten für einen bevorstehenden Makro-Simulationsschritt bereitgestellt hat,
(b) wenn die nicht-echtzeitfähige Teilsimulation (12) berechnete Simulationsdaten (Sn2) für den bevorstehenden Makro-Simulationsschritt fertiggestellt hat und der echtzeitfähigen Teilsimulation (10) bereitgestellt hat, Verwenden der berechneten Simulationsdaten (Sn2) für den bevorstehenden Makro-Simulationsschritt in der echtzeitfähigen Teilsimulation (10),
(c) wenn die nicht-echtzeitfähige Teilsimulation (12) keine berechneten Simulationsdaten für den bevorstehenden Makro-Simulationsschritt fertiggestellt hat und der echtzeitfähigen Teilsimulation (10) bereitgestellt hat, Erstellen von geschätzten Simulationsdaten (Sg3) für den bevorstehenden Makro-Simulationsschritt,
(d) Einstellen der zweiten Simulationszeit auf die erste Simulationszeit nach Fertigstellung der Berechnung von nicht rechtzeitig bereitgestellten Simulationsdaten (Sn3).

2. Verfahren nach Anspruch 1, wobei die zweite Simulationszeit (tv) mit der ersten Simulationszeit (te) über Zeitstempel gekoppelt ist, wobei die echtzeitfähige Teilsimulation (10) erste Zeitstempel erzeugt und jeder erste Zeitstempel die erste Simulationszeit (te) anzeigt und wobei die nicht-echtzeitfähige Teilsimulation (12) bei Fertigstellung der Berechnung von berechneten Simulationsdaten zweite Zeitstempel erzeugt,
wobei das Einstellen der zweiten Simulationszeit auf die erste Simulationszeit ein Erzeugen eines zweiten Zeitstempels umfasst, der auf die erste Simulationszeit der letzten von der echtzeitfähigen Teilsimulation erhaltenen und für die Berechnung verwendeten Simulationsdaten gesetzt wird oder der auf die erste Simulationszeit der letzten von der echtzeitfähigen Teilsimulation erhaltenen und für die Berechnung verwendeten Simulationsdaten, inkrementiert um einen vorbestimmten Zeit-Anpassungswert, gesetzt wird.

3. Verfahren nach Anspruch 1 oder 2, wobei die nicht-echtzeitfähige Teilsimulation (12) einen Eingangsdatenpuffer (120) hat und die echtzeitfähige Teilsimulation (10) Simulationsdaten in den Eingangsdatenpuffer (120) der nicht-echtzeitfähigen Teilsimulation schreibt, wobei die zweite Simulationszeit mit der ersten Simulationszeit dadurch in Übereinstimmung gebracht wird, dass alle in den Eingangsdatenpuffer (120) geschriebenen Simulationsdaten für die Fertigstellung von berechneten Simulationsdaten verwendet werden und berechnete Simulationsdaten rechtzeitig für den nächsten bevorstehenden Makro-Simulationsschritt bereitgestellt werden.

4. Verfahren nach einem der vorhergehenden Ansprüche, weiterhin aufweisend den Schritt:
wenn die nicht-echtzeitfähige Teilsimulation (12) keine berechneten Simulationsdaten für den bevorstehenden Makro-Simulationsschritt bereitgestellt hat, nachträgliches Bereitstellen der berechneten Simulationsdaten für den genannten bevorstehenden Makro-Simulationsschritt an die echtzeitfähige Teilsimulation (10) und/oder an ein Fehlerbehandlungssystem (18).

5. Verfahren nach Anspruch 4, weiterhin aufweisend die Schritte:
Berechnen eines Schätzfehlers aus den geschätzten Simulationsdaten für den bevorstehenden Makro-Simulationsschritt und den nachträglich bereitgestellten berechneten Simulationsdaten für den genannten bevorstehenden Makro-Simulationsschritt, und
nachträgliches Anpassen der echtzeitfähigen Teilsimulation auf Basis des Schätzfehlers und/oder Anpassen des Erstellens von geschätzten Simulationsdaten für spätere Makro-Simulationsschritte.

6. Verfahren nach einem der vorhergehenden Ansprüche, weiterhin aufweisend den Schritt:
wenn die nicht-echtzeitfähige Teilsimulation (12) keine berechneten Simulationsdaten für den bevorstehenden Makro-Simulationsschritt bereitgestellt hat, unmittelbares Erstellen von berechneten Simulationsdaten für einen oder mehrere dem genannten bevorstehenden Makro-Simulationsschritt nachfolgende(n) Makro-Simulationsschritt(e), wobei das unmittelbare Erstellen von berechneten Simulationsdaten so lange durchgeführt wird, bis berechnete Simulationsdaten rechtzeitig an die echtzeitfähige Teilsimulation (10) bereitgestellt werden.

7. Verfahren nach einem der vorhergehenden Ansprüche, wobei die nicht-echtzeitfähige Teilsimulation (12) eine Rechenleistung hat, die gemittelt über den gesamten Simulationsverlauf die berechneten Simulationsdaten rechtzeitig bereitstellt.

8. Verfahren nach einem der vorhergehenden Ansprüche, wobei die echtzeitfähige Teilsimulation (10) in jedem Makro-Simulationsschritt oder in jedem n-ten Makro-Simulationsschritt oder in einer vorgegebenen, teilregelmäßigen Abfolge von Makro-Simulationsschritten überprüft, ob die nicht-echtzeitfähige Teilsimulation (12) berechnete Simulationsdaten für den jeweils bevorstehenden Makro-Simulationsschritt bereitgestellt hat.

9. Verfahren nach einem der vorhergehenden Ansprüche, wobei das Erstellen von geschätzten Simulationsdaten in der echtzeitfähigen Teilsimulation (10) und/oder in der nicht-echtzeitfähigen Teilsimulation (12) und/oder in einem Fehlerbehandlungssystem (18) durchgeführt wird.

10. Verfahren nach einem der vorhergehenden Ansprüche, wobei das Erstellen von geschätzten Simulationsdaten zumindest einen der folgenden Schritte aufweist:
Extrapolieren der geschätzten Simulationsdaten aus früheren, von der nicht-echtzeitfähigen Teilsimulation zur Verfügung gestellten berechneten Simulationsdaten, insbesondere Extrapolieren nullter, erster oder zweiter Ordnung,
Ableiten der geschätzten Simulationsdaten aus einer Kennlinie bzw. einem Kennfeld,
Erstellen der geschätzten Simulationsdaten auf Basis von früheren Simulationen,
Begrenzen der geschätzten Simulationsdaten auf vorbestimmte Minimal- und/oder Maximalwerte,
Ausrichten der geschätzten Simulationsdaten an einer vorbestimmten Änderungsdynamik, und
Berücksichtigen interner Zustände des echtzeitfähigen Systems.

11. Verfahren nach einem der vorhergehenden Ansprüche, weiterhin aufweisend den Schritt:
Protokollieren von Fällen, in denen die nicht-echtzeitfähige Teilsimulation (12) keine berechneten Simulationsdaten für den bevorstehenden Makro-Simulationsschritt fertiggestellt hat und der echtzeitfähigen Teilsimulation (10) bereitgestellt hat, wobei das Protokollieren insbesondere ein Dokumentieren der Zeitpunkte und/oder der Anzahl der genannten Fälle aufweist.

12. Verfahren nach einem der vorhergehenden Ansprüche,
wobei die echtzeitfähige Teilsimulation (10) eine Umgebung eines Steuergeräts, insbesondere ein zu steuerndes technisches System, simuliert und wobei die nicht-echtzeitfähige Teilsimulation (12) ein Steuergerät simuliert, oder
wobei die nicht-echtzeitfähige Teilsimulation (10) eine Umgebung eines Steuergeräts, insbesondere ein zu steuerndes technisches System, simuliert und wobei die echtzeitfähige Teilsimulation (12) ein Steuergerät simuliert.

13. Verfahren nach einem der vorhergehenden Ansprüche, wobei die echtzeitfähige Teilsimulation (10) einen ersten Teil einer Umgebung eines Steuergeräts, insbesondere einen ersten Teil eines zu steuernden technischen Systems, simuliert, und wobei die nicht-echtzeitfähige Teilsimulation (12) einen zweiten Teil einer Umgebung eines Steuergeräts, insbesondere einen zweiten Teil eines zu steuernden technischen Systems, simuliert.

14. Simulationsvorrichtung (2) für die Steuergerätentwicklung, wobei die Simulationsvorrichtung echtzeitfähig ist und ein Steuergerät oder eine Umgebung eines Steuergeräts oder eine Kombination eines Steuergeräts und einer Umgebung des Steuergeräts simuliert, aufweisend:
eine echtzeitfähige Teilsimulation (10) mit einer der Echtzeit entsprechenden ersten Simulationszeit (te),
eine mit der echtzeitfähigen Teilsimulation (10) interagierende, nicht-echtzeitfähige Teilsimulation (12) mit einer mit der ersten Simulationszeit gekoppelten, zu Beginn der echtzeitfähigen Simulation mit der ersten Simulationszeit (te) übereinstimmenden, virtuellen zweiten Simulationszeit (tv), und
einen Kommunikationspfad (16), der für einen Austausch von Simulationsdaten zwischen der echtzeitfähigen Teilsimulation (10) und der nicht-echtzeitfähigen Teilsimulation (12) eingerichtet ist,
wobei die nicht-echtzeitfähige Teilsimulation (12) eingerichtet ist, berechnete Simulationsdaten an die echtzeitfähige Teilsimulation (10) bereitzustellen,
wobei die echtzeitfähige Teilsimulation (10) eingerichtet ist:
zu überprüfen, ob die nicht-echtzeitfähige Teilsimulation (12) berechnete Simulationsdaten für einen bevorstehenden Makro-Simulationsschritt bereitgestellt hat,
die berechneten Simulationsdaten für den bevorstehenden Makro-Simulationsschritt zu verwenden, wenn die nicht-echtzeitfähige Teilsimulation (12) berechnete Simulationsdaten für den bevorstehenden Makro-Simulationsschritt fertiggestellt hat und der echtzeitfähigen Teilsimulation (10) bereitgestellt hat, und
geschätzte Simulationsdaten für den bevorstehenden Makro-Simulationsschritt zu verwenden, wenn die nicht-echtzeitfähige Teilsimulation (12) keine berechneten Simulationsdaten für den bevorstehenden Simulationsschritt fertiggestellt hat und der echtzeitfähigen Teilsimulation (10) bereitgestellt hat, und
wobei die nicht-echtzeitfähige Teilsimulation (12) eingerichtet ist, die zweite Simulationszeit nach Fertigstellung der Berechnung von nicht rechtzeitig bereitgestellten Simulationsdaten auf die erste Simulationszeit einzustellen.

15. Simulationsvorrichtung (2) nach Anspruch 14, wobei die nicht-echtzeitfähige Teilsimulation (12) einen oder mehrere Prozessoren bzw. Prozessorkerne aufweist, der bzw. die eine Rechenleistung hat/haben, die ausreichend ist, die berechneten Simulationsdaten gemittelt über den gesamten Simulationsverlauf rechtzeitig bereitzustellen.
